(19) Europäisches Patentamt
European Patent Office
Office européen des brevets

(11) **EP 2 448 756 B1**

(12) **FASCICULE DE BREVET EUROPEEN**

(45) Date de publication et mention
de la délivrance du brevet:
**06.08.2014 Bulletin 2014/32**

(21) Numéro de dépôt: **10726525.8**

(22) Date de dépôt: **30.06.2010**

(51) Int Cl.:
**B32B 17/10** *(2006.01)*     **C03C 27/12** *(2006.01)*
**G01N 3/32** *(2006.01)*     **H01L 31/048** *(2014.01)*

(86) Numéro de dépôt international:
**PCT/EP2010/059270**

(87) Numéro de publication internationale:
**WO 2011/000862 (06.01.2011 Gazette 2011/01)**

(54) **PROCEDE DE FABRICATION D'UN ELEMENT DE VITRAGE FEUILLETE**

VERFAHREN ZUR HERSTELLUNG EINES VERBUNDGLASELEMENTES

PROCESS FOR THE MANUFACTURE OF A LAMINATED GLAZING ELEMENT

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **30.06.2009 FR 0954466**

(43) Date de publication de la demande:
**09.05.2012 Bulletin 2012/19**

(73) Titulaire: **Saint-Gobain Glass France
92400 Courbevoie (FR)**

(72) Inventeurs:
• **NUGUE, Jean-Clément
F-60260 Lamorlaye (FR)**
• **LEVASSEUR, Fabien
F-60150 Longueil Annel (FR)**
• **DECOURCELLE, Romain
F-60200 Compiègne (FR)**

(74) Mandataire: **Bregal, Laurence
Saint-Gobain Recherche
Département Propriété Industrielle
39, quai Lucien Lefranc
93300 Aubervilliers (FR)**

(56) Documents cités:
**FR-A- 2 616 908     FR-A1- 2 086 121
US-A- 4 749 430     US-B1- 6 432 522**

**Description**

La présente invention a trait à un procédé de fabrication d'un élément de vitrage feuilleté comportant au moins un substrat à fonction verrière et au moins une couche d'intercalaire polymérique. L'invention a également trait à un élément de vitrage feuilleté optimisé.

Au sens de l'invention, on entend par vitrage feuilleté toute structure de vitrage comprenant au moins un substrat à fonction verrière et au moins une couche d'intercalaire, y compris une structure comprenant un substrat unique et une couche d'intercalaire unique associés entre eux.

Il est connu que les lois de comportement viscoélastique des intercalaires polymériques destinés à la fabrication de vitrages feuilletés influent sur le comportement mécanique de ces vitrages feuilletés lorsqu'ils sont soumis à un chargement statique ou quasi-statique. Pour valider le dimensionnement d'un élément de vitrage feuilleté, il convient de vérifier que sa résistance à la charge est compatible avec son application. Il convient par exemple de vérifier qu'un vitrage de façade d'un bâtiment est apte à résister à une certaine charge de vent, ou qu'un module photovoltaïque destiné à être installé en toiture d'un bâtiment est apte à résister à une certaine charge de neige. En particulier, l'intensité et le mode de répartition du chargement prévisible sur un élément de vitrage feuilleté, ainsi que la gamme de temps et de températures caractéristiques de ce chargement, sont des paramètres à considérer lors de la fabrication de l'élément de vitrage feuilleté.

Une méthode classique de détermination de la résistance à la charge d'un élément de vitrage feuilleté, dans des conditions d'appui et de chargement déterminées, consiste à utiliser un modèle analytique, dans lequel le vitrage feuilleté est assimilé à un vitrage sans intercalaire et la participation de l'intercalaire au transfert du cisaillement dans l'élément de vitrage feuilleté est représentée par un coefficient de transfert $\overline{\omega}$, compris entre 0 et 1. La contribution de l'intercalaire aux performances mécaniques du vitrage feuilleté est d'autant plus importante que le coefficient de transfert $\overline{\omega}$ augmente. En pratique, le coefficient de transfert $\overline{\omega}$ est utilisé pour définir une épaisseur équivalente de l'élément de vitrage feuilleté, à partir de laquelle des grandeurs représentatives de la résistance à la charge de l'élément peuvent être calculées, selon des formules analogues à celles applicables aux éléments de vitrage monolithiques.

À titre d'exemple, dans cette méthode classique, l'épaisseur équivalente pour le calcul de la flèche d'une plaque de vitrage feuilleté est donnée par l'équation :

$$h_{ef;w} = \sqrt[3]{(1-\varpi)\sum_i h_i^3 + \varpi\left(\sum_i h_i\right)^3} \quad \text{(I),}$$

et l'épaisseur équivalente pour le calcul de la contrainte maximale sur le substrat à fonction verrière *i* d'une plaque de vitrage feuilleté est donnée par l'équation :

$$h_{ef;\sigma;i} = \sqrt{\frac{\left(h_{ef;w}\right)^3}{\left(h_i + 2\varpi h_{m;i}\right)}} \quad \text{(II),}$$

où $h_i$ est l'épaisseur du ou de chaque substrat à fonction verrière de la plaque de vitrage feuilleté, et
$h_{m;i}$ est la distance entre le plan moyen du substrat à fonction verrière *i* et le plan moyen du vitrage feuilleté, sans tenir compte des épaisseurs des couches d'intercalaire utilisées dans le vitrage feuilleté.

Toutefois, aucune méthode permettant la détermination précise du coefficient de transfert $\overline{\omega}$ pour un élément de vitrage feuilleté donné n'est disponible dans la littérature. De plus, dans la méthode classique, l'épaisseur équivalente est exprimée en fonction du coefficient de transfert $\overline{\omega}$ de l'intercalaire et de l'épaisseur du ou de chaque substrat de l'élément de vitrage feuilleté, sans tenir compte de l'épaisseur d'intercalaire dans le vitrage feuilleté. Or, dans les cas où l'intercalaire contribue de manière non négligeable aux performances mécaniques de l'élément de vitrage feuilleté, l'absence de dépendance de l'épaisseur équivalente vis-à-vis de l'épaisseur d'intercalaire peut conduire à une approximation trop importante du comportement mécanique de la structure. En particulier, dans la méthode classique, aucune distinction n'est faite entre un élément de vitrage feuilleté comportant un unique pli d'intercalaire d'épaisseur standard, disposé entre deux substrats verriers, et un élément de vitrage feuilleté comportant deux plis d'épaisseur standard du même intercalaire, disposés entre les deux mêmes substrats verriers. Il en résulte, dans la mise en place de prescriptions pour le dimensionnement d'un élément de vitrage feuilleté, une tendance à surestimer les épaisseurs nécessaires des substrats verriers, alors qu'une augmentation de l'épaisseur d'intercalaire pourrait suffire à satisfaire aux critères de dimensionnement. Dès lors, le coût et la masse des éléments de vitrage feuilleté obtenus dans le cadre de la méthode classique ne sont pas optimisés.

C'est à ces inconvénients qu'entend plus particulièrement remédier l'invention en proposant un procédé de fabrication d'un élément de vitrage feuilleté qui garantit l'obtention d'un élément de vitrage feuilleté optimisé à la fois en termes de masse et de résistance à la charge.

A cet effet, l'invention a pour objet un procédé de fabrication d'un élément de vitrage feuilleté pour qu'il résiste à un chargement prédéterminé correspondant à une gamme de temps et à une gamme de températures caractéristiques, l'élément de vitrage feuilleté comportant au moins un substrat à fonction verrière et au moins une couche d'intercalaire polymérique, caractérisé en ce qu'il comprend des étapes dans lesquelles :

- on obtient la loi de comportement viscoélastique du matériau constitutif de l'intercalaire sur les gammes de temps et de températures caractéristiques du chargement prédéterminé ;
- on calcule la valeur maximale d'au moins une grandeur représentative de la résistance à la charge de l'élément de vitrage feuilleté soumis au chargement prédéterminé, en utilisant - un modèle analytique dans lequel la participation de l'intercalaire au transfert du cisaillement dans l'élément de vitrage feuilleté est représentée par un coefficient de transfert, et - une équation exprimant le coefficient de transfert en fonction du module d'Young de l'intercalaire, du chargement appliqué à l'élément de vitrage feuilleté et des dimensions de l'élément de vitrage feuilleté ;
- on ajuste les dimensions de l'élément de vitrage feuilleté de telle sorte que la valeur maximale calculée de la grandeur représentative de la résistance à la charge de l'élément de vitrage feuilleté est inférieure ou égale à une valeur maximale admissible ;
- on prépare et on assemble le substrat et la couche d'intercalaire de l'élément de vitrage feuilleté aux dimensions ajustées.

Au sens de l'invention, on entend par dimensions de l'élément de vitrage feuilleté non seulement ses dimensions périphériques, par exemple, dans le cas d'une plaque rectangulaire de vitrage feuilleté, sa largeur et sa longueur, mais également les épaisseurs de son ou ses substrats et de sa ou ses couches d'intercalaire constitutifs.

Selon d'autres caractéristiques avantageuses d'un procédé de fabrication d'un élément de vitrage feuilleté selon l'invention, prises isolément ou selon toutes les combinaisons techniquement possibles :

- Pour la détermination de la loi de comportement du matériau constitutif de l'intercalaire, on mesure le module d'Young sur un échantillon de l'intercalaire à l'aide d'un visco-analyseur, en faisant varier la fréquence et la température et en imposant un déplacement dynamique constant, et on utilise la loi d'équivalence fréquence/température établie par la méthode WLF.
- On détermine la loi de comportement du matériau constitutif de l'intercalaire pour une gamme de fréquences comprises entre $5.10^{-7}$ Hz et $3.10^{-1}$ Hz et une gamme de températures comprises entre -20°C et 60°C.
- On calcule, en tant que grandeurs représentatives de la résistance à la charge de l'élément de vitrage feuilleté :

    ◦ la flèche de l'élément de vitrage feuilleté, à partir de l'épaisseur équivalente $h_{ef;w}$ du vitrage feuilleté telle que :

$$h_{ef;w} = \sqrt[3]{(1-\varpi)\left(\sum_i h_i^3 + \sum_j h_{\text{int}\,j}^3\right) + \varpi\left(\sum_i h_i + \sum_j h_{\text{int}\,j}\right)^3} \qquad \text{(III)},$$

et/ou

    ◦ la contrainte maximale sur le ou chaque substrat à fonction verrière de l'élément de vitrage feuilleté, à partir de l'épaisseur équivalente $h_{ef;\sigma;i}$ du vitrage feuilleté telle que :

$$h_{ef;\sigma;i} = \sqrt{\frac{\left(h_{ef;w}\right)^3}{\left(h_i + 2\varpi h_{m;i}\right)}} \qquad \text{(IV)},$$

où

$h_i$ : épaisseur du ou de chaque substrat à fonction verrière,
$h_{\text{int}j}$ : épaisseur de la ou de chaque couche d'intercalaire,
$h_{m;i}$ : distance entre le plan moyen du substrat à fonction verrière $i$ et le plan moyen du vitrage feuilleté.

- On détermine l'équation exprimant le coefficient de transfert, valable pour tout élément de vitrage feuilleté comportant au moins un substrat à fonction verrière et au moins une couche d'intercalaire polymérique, selon les étapes suivantes :

■ on obtient la loi de comportement viscoélastique du matériau constitutif de l'intercalaire de l'élément de vitrage feuilleté ;

■ on réalise un modèle numérique par éléments finis en flexion de l'élément de vitrage feuilleté, en utilisant la loi de comportement du matériau constitutif de l'intercalaire pour définir les propriétés mécaniques de l'intercalaire ;

■ on compare les résultats obtenus, d'une part, avec le modèle numérique et, d'autre part, avec un modèle analytique dans lequel la participation de l'intercalaire au transfert du cisaillement est représentée par un coefficient de transfert, et on ajuste la valeur du coefficient de transfert jusqu'à convergence de ces résultats ;

■ on construit par itérations successives une fonction de transfert représentative de l'évolution du coefficient de transfert en fonction du module d'Young de l'intercalaire ;

■ on met la fonction de transfert en équation de telle sorte que le coefficient de transfert est exprimé en fonction du module d'Young de l'intercalaire, du chargement appliqué à l'élément de vitrage feuilleté et des dimensions de l'élément de vitrage feuilleté ;

■ on détermine empiriquement les paramètres de l'équation exprimant le coefficient de transfert en fonction du module d'Young de l'intercalaire, du chargement appliqué à l'élément de vitrage feuilleté et des dimensions de l'élément de vitrage feuilleté.

- L'élément de vitrage feuilleté est une plaque rectangulaire, les dimensions de l'élément de vitrage feuilleté qui interviennent dans l'équation exprimant le coefficient de transfert étant la largeur et la longueur de la plaque, l'épaisseur du ou de chaque substrat à fonction verrière et l'épaisseur de la ou de chaque couche d'intercalaire.

L'invention a également pour objet un support d'enregistrement d'informations comportant des instructions pour la mise en oeuvre des étapes de calcul d'un procédé de fabrication tel que décrit ci-dessus, lorsque ces instructions sont exécutées par une unité de calcul électronique, où les instructions comprennent une instruction de calcul de la valeur maximale d'au moins une grandeur représentative de la résistance à la charge de l'élément de vitrage feuilleté soumis au chargement prédéterminé, en utilisant - un modèle analytique dans lequel la participation de l'intercalaire au transfert du cisaillement dans l'élément de vitrage feuilleté est représentée par un coefficient de transfert, et - une équation exprimant le coefficient de transfert en fonction du module d'Young de l'intercalaire, du chargement appliqué à l'élément de vitrage feuilleté et des dimensions de l'élément de vitrage feuilleté.

Selon un mode de réalisation, les instructions comprennent, suite à l'instruction de calcul de la valeur maximale d'au moins une grandeur représentative de la résistance à la charge de l'élément de vitrage feuilleté soumis audit chargement prédéterminé, une instruction de calcul de valeurs ajustées de dimensions de l'élément de vitrage feuilleté de telle sorte que la valeur maximale calculée de la grandeur représentative est inférieure ou égale à une valeur maximale admissible de cette grandeur représentative.

Enfin, l'invention s'intéresse à un élément de vitrage feuilleté obtenu par un procédé de fabrication tel que décrit ci-dessus.

L'invention s'intéresse également à un élément de vitrage feuilleté destiné à être installé sur un site correspondant à un chargement maximal prédéterminé appliqué sur l'élément, cet élément de vitrage feuilleté comportant au moins un substrat à fonction verrière et au moins une couche d'intercalaire polymérique, cet élément de vitrage feuilleté ayant une épaisseur d'intercalaire et/ou une épaisseur de substrat réduites par rapport, respectivement, à l'épaisseur d'intercalaire et à l'épaisseur de substrat d'un élément de vitrage feuilleté nominal correspondant, les autres dimensions de l'élément de vitrage feuilleté étant gardées égales à celles de l'élément de vitrage feuilleté nominal correspondant, où l'élément de vitrage feuilleté nominal correspondant est un élément de vitrage feuilleté fabriqué pour résister au chargement maximal prédéterminé par une méthode de fabrication dans laquelle l'épaisseur équivalente de l'élément de vitrage feuilleté, à partir de laquelle des grandeurs représentatives de la résistance à la charge de l'élément sont calculées selon des formules analogues à celles applicables aux éléments de vitrage monolithiques, est indépendante de l'épaisseur de la couche d'intercalaire.

Selon d'autres caractéristiques avantageuses d'un élément de vitrage feuilleté fabriqué selon l'invention :

- L'élément de vitrage feuilleté est un vitrage de bâtiment comportant au moins deux substrats à fonction verrière et au moins une couche d'intercalaire polymérique, la ou chaque couche d'intercalaire étant disposée entre deux substrats à fonction verrière.

- L'élément de vitrage feuilleté est un module photovoltaïque comportant un substrat avant à fonction verrière et au moins une cellule photovoltaïque, une couche d'intercalaire de feuilletage polymère étant intercalée entre le substrat avant et la cellule photovoltaïque.

Les caractéristiques et avantages de l'invention apparaîtront dans la description qui va suivre de plusieurs modes de réalisation d'un procédé de fabrication et d'un élément de vitrage feuilleté selon l'invention, donnée uniquement à titre d'exemple et faite en se référant aux dessins annexés dans lesquels :

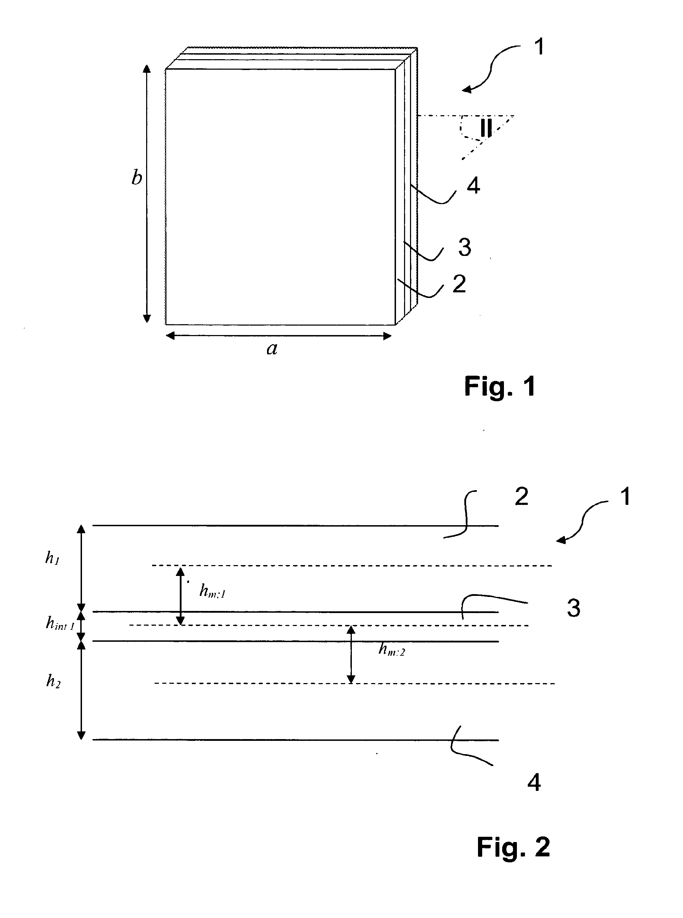

- la figure 1 est une vue en perspective schématique d'une plaque de vitrage feuilleté comportant deux substrats à fonction verrière et un intercalaire polymérique ;
- la figure 2 est une coupe partielle selon le plan II de la figure 1 ;

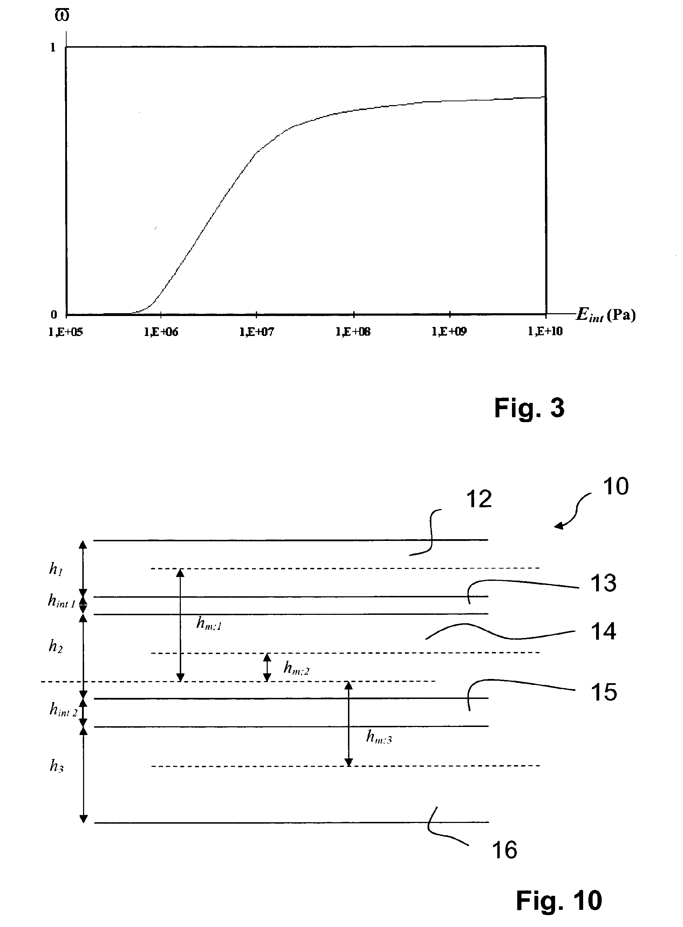

- la figure 3 est une courbe représentative de l'évolution du coefficient de transfert en fonction du module d'Young de l'intercalaire ;

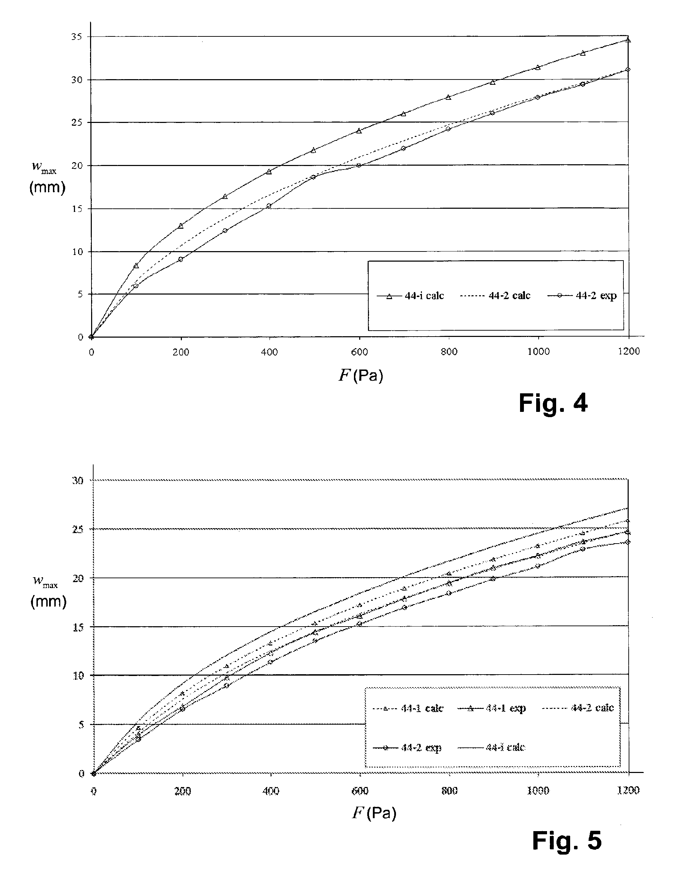

- la figure 4 est un graphique montrant l'évolution de la flèche maximale d'une plaque rectangulaire de vitrage feuilleté en fonction de la charge de vent appliquée sur la plaque, obtenue respectivement par une mesure expérimentale, par estimation dans le cadre d'un procédé de fabrication de vitrage feuilleté de l'état de la technique et par estimation dans le cadre du procédé de fabrication de vitrage feuilleté conforme à l'invention, pour une plaque ayant une largeur de 2 m et une longueur de 3 m et comportant deux substrats en verre d'épaisseur 4 mm chacun et deux plis d'intercalaire standard, c'est-à-dire une couche d'intercalaire d'épaisseur 0,76 mm ;
- la figure 5 est un graphique montrant l'évolution de la flèche maximale d'une plaque rectangulaire de vitrage feuilleté en fonction de la charge de vent appliquée sur la plaque, obtenue respectivement par une mesure expérimentale, par estimation dans le cadre d'un procédé de fabrication de vitrage feuilleté de l'état de la technique et par estimation dans le cadre du procédé de fabrication de vitrage feuilleté conforme à l'invention, pour une plaque ayant une largeur de 2 m et une longueur de 3 m et comportant deux substrats en verre d'épaisseur 4 mm chacun et un ou deux plis d'intercalaire structurel, c'est-à-dire une couche d'intercalaire d'épaisseur 0,38 mm ou 0,76 mm;

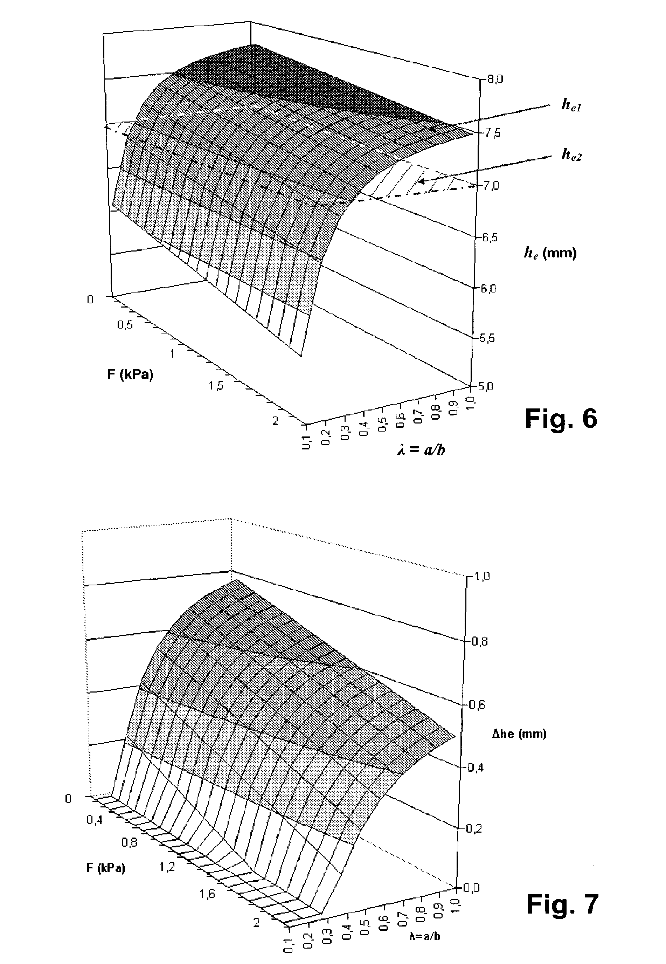

- la figure 6 est un graphique en trois dimensions, représentatif de l'épaisseur équivalente d'une plaque rectangulaire de vitrage feuilleté, en fonction à la fois de la charge de vent appliquée sur la plaque et du rapport $\lambda = a/b$ de la largeur sur la longueur de la plaque, pour une plaque ayant une longueur de 3 m et comportant deux substrats en verre d'épaisseur 4 mm chacun et deux plis d'intercalaire structurel, c'est-à-dire une couche d'intercalaire d'épaisseur 0,76 mm, respectivement pour une plaque de vitrage feuilleté conforme à l'invention et pour une plaque de vitrage feuilleté nominale correspondante de l'état de la technique ;
- la figure 7 est un graphique en trois dimensions déduit à partir de la figure 6, représentatif du gain en termes d'épaisseur équivalente de la plaque de vitrage feuilleté conforme à l'invention considérée sur la figure 6, par rapport à l'épaisseur équivalente d'une plaque de vitrage feuilleté nominale correspondante de l'état de la technique, en fonction à la fois de la charge de vent appliquée sur la plaque et du rapport $\lambda = a/b$ de la largeur sur la longueur de la plaque ;

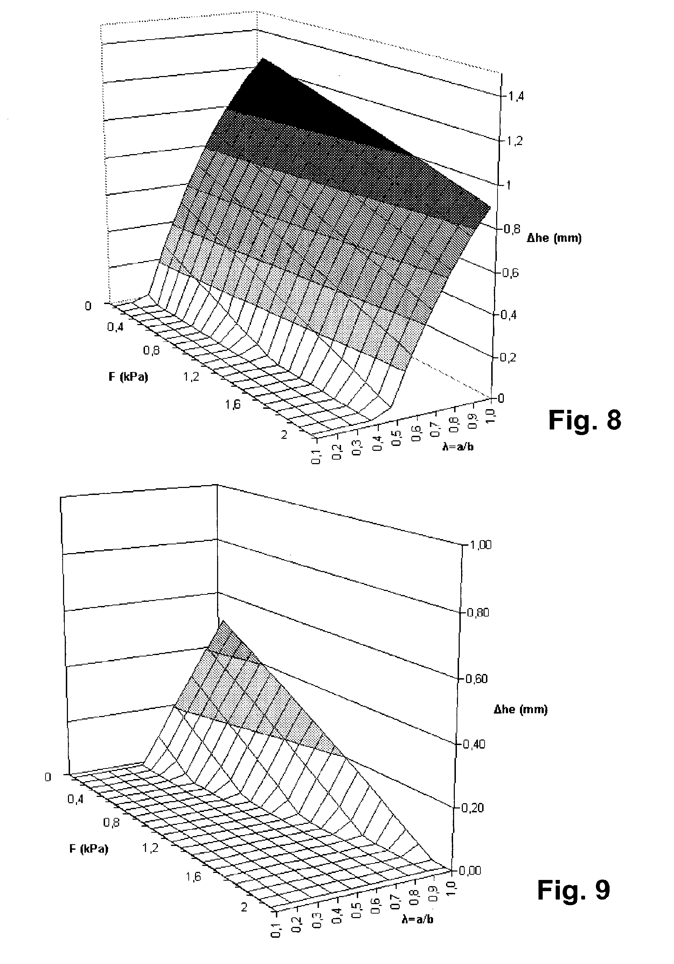

- la figure 8 est un graphique analogue au graphique de la figure 7, représentatif du gain en termes d'épaisseur équivalente d'une plaque rectangulaire de vitrage feuilleté, en fonction à la fois de la charge de vent appliquée sur la plaque et du rapport $\lambda = a/b$ de la largeur sur la longueur de la plaque, pour une plaque ayant une longueur de 3 m et comportant deux substrats en verre d'épaisseur 4 mm chacun et deux plis d'intercalaire standard, c'est-à-dire une couche d'intercalaire d'épaisseur 0,76 mm, respectivement pour une plaque de vitrage feuilleté conforme à l'invention et pour une plaque de vitrage feuilleté nominale correspondante de l'état de la technique ;
- la figure 9 est un graphique analogue au graphique de la figure 7, représentatif du gain en termes d'épaisseur équivalente d'une plaque rectangulaire de vitrage feuilleté, en fonction à la fois de la charge de vent appliquée sur la plaque et du rapport $\lambda = a/b$ de la largeur sur la longueur de la plaque, pour une plaque ayant une longueur de 3 m et comportant deux substrats en verre d'épaisseur 4 mm chacun et deux plis d'intercalaire acoustique, c'est-à-dire une couche d'intercalaire d'épaisseur 0,76 mm, respectivement pour une plaque de vitrage feuilleté conforme à l'invention et pour une plaque de vitrage feuilleté nominale correspondante de l'état de la technique ; et
- la figure 10 est une coupe analogue à la figure 2 pour une plaque de vitrage feuilleté comportant trois substrats à fonction verrière et deux couches d'intercalaire polymérique, disposées chacune entre deux substrats.

Sur la figure 1 est représentée une plaque de vitrage feuilleté 1 de forme rectangulaire, comportant deux substrats en verre 2 et 4 entre lesquels est disposée de manière solidaire une couche d'intercalaire 3 à base de butyral de polyvinyle (PVB). En variante, la couche d'intercalaire 3 peut être constituée en tout matériau viscoélastique de propriétés adaptées autre que le PVB. On note $a$ et $b$, respectivement, la largeur et la longueur de la plaque 1, $h_1$ et $h_2$ les épaisseurs des substrats 2 et 4 et $h_{int1}$ l'épaisseur de la couche d'intercalaire 3. Conformément au procédé de fabrication selon l'invention, on cherche à dimensionner la plaque de vitrage feuilleté 1 pour qu'elle résiste à un chargement prédéterminé $F_0$, tel qu'une charge de neige dans le premier mode de réalisation, ou une charge de vent dans le deuxième mode de réalisation illustré sur les figures 4 à 9.

Une étape préalable, décisive pour la mise en place du procédé de fabrication conforme à l'invention, est la détermination d'une équation exprimant le coefficient de transfert $\overline{\omega}$ de l'intercalaire d'une plaque de vitrage feuilleté en fonction du module d'Young $E_{int}$ de l'intercalaire, du chargement $F$ appliqué à la plaque et des dimensions $a$, $b$, $h_{i,}$ $h_{intj}$ de la plaque de vitrage feuilleté. Cette équation, valable pour toute plaque de vitrage feuilleté comportant au moins un substrat à fonction verrière et au moins une couche d'intercalaire polymérique, est déterminée selon les étapes décrites ci-dessous.

Tout d'abord, on détermine expérimentalement la loi de comportement viscoélastique $E_{int}(t, T)$ du matériau constitutif de l'intercalaire de la plaque de vitrage feuilleté. L'évolution du module d'Young $E_{int}$ en fonction de la fréquence et de la température est déterminée pour une gamme de fréquences $f = 1/t$ comprises entre $5.10^{-7}$ Hz et $3.10^{-1}$ Hz et une gamme de températures T comprises entre -20°C et 60°C. Ces gammes de fréquences et de températures correspondent aux gammes caractéristiques des chargements statiques ou quasi-statiques appliqués aux éléments de vitrage feuilleté, par exemple lorsqu'ils équipent des bâtiments. Notamment, la durée caractéristique $t$ d'une charge de vent est l'ordre de 3 secondes, avec une plage de températures T correspondantes comprises entre 0°C et 20°C, alors que la durée caractéristique $t$ d'une charge de neige est de l'ordre de 3 semaines, avec une plage de températures T correspondantes comprises entre -20°C et 20°C.

Pour déterminer la loi de comportement $E_{int}(t, T)$, on mesure le module d'Young $E_{int}$ sur un échantillon de l'intercalaire à l'aide d'un visco-analyseur, par exemple le visco-analyseur VA400 commercialisé par la société METRAVIB, en faisant varier la fréquence et la température et en imposant un déplacement dynamique constant. À titre d'exemple, le déplacement dynamique est fixé à $1.10^{-6}$m. Le visco-analyseur METRAVIB ne fournit des valeurs que sur le domaine de fréquences 1 à 400 Hz. Pour les valeurs de fréquences et de températures pour lesquelles il n'est pas possible de réaliser une mesure à l'aide du visco-analyseur, on utilise, de manière connue, la loi d'équivalence fréquence/température établie par la méthode WLF (Williams-Landel-Ferry).

On réalise ensuite un modèle numérique par éléments finis en flexion de la plaque de vitrage feuilleté, afin de calculer la résistance à la charge de la plaque de vitrage feuilleté soumise à un certain chargement. Les propriétés mécaniques de l'intercalaire sont définies, dans le cadre de ce modèle numérique, en utilisant la loi de comportement préalablement déterminée $E_{int}(t, T)$. À titre d'exemple, ce modèle numérique peut être réalisé à l'aide du logiciel de calcul de la marque COSMOS-M, dans lequel on intègre un modèle non linéaire de plaque de vitrage feuilleté incorporant l'intercalaire, avec des appuis simples sur chacun des quatre côtés de la plaque et un chargement uniforme.

On compare alors les résultats du calcul numérique avec ceux obtenus par des formules analytiques, dans lesquelles la participation de l'intercalaire au transfert du cisaillement dans la plaque de vitrage feuilleté est représentée par le coefficient de transfert $\overline{\omega}$. Ces formules analytiques peuvent par exemple permettre de calculer la flèche $w_{max}$ de la plaque de vitrage feuilleté et la contrainte maximale $\sigma_{maxi}$ sur le substrat à fonction verrière $i$ de la plaque de vitrage feuilleté :

$$w_{\max} = k_4 \frac{A^2}{h_{ef;w}{}^3} \frac{F}{E_{int}} \quad \text{(V) et} \quad \sigma_{\max i} = k_1 \frac{A}{h_{ef;\sigma;i}{}^2} F \quad \text{(VI),}$$

où $h_{ef,w}$ est l'épaisseur équivalente pour le calcul de la flèche $w_{max}$ telle que définie dans l'expression (I) précitée, $h_{ef,\sigma,i}$ est l'épaisseur équivalente pour le calcul de la contrainte maximale $\sigma_{max}i$ telle que définie dans l'expression (II) précitée, $F$ est le chargement appliqué sur la plaque de vitrage feuilleté, $E_{int}$ est le module d'Young de l'intercalaire de la plaque de vitrage feuilleté, $A$ est égal au produit $ab$ de la largeur $a$ et la longueur $b$ de la plaque de vitrage feuilleté, $k_1$ et $k_4$ sont des coefficients dont les valeurs sont données dans l'annexe B du projet de norme européenne prEN 13474.

En variante, afin de tenir compte de l'épaisseur d'intercalaire dans la plaque de vitrage feuilleté, il est possible de reformuler les expressions de l'épaisseur équivalente, pour le calcul de la flèche et de la contrainte maximale selon les formules (V) et (VI), de la manière suivante :

$$h_{ef;w} = \sqrt[3]{(1-\varpi)(\sum_i h_i^3 + \sum_j h_{int_j}^3) + \varpi(\sum_i h_i + \sum_j h_{int_j})^3} \quad \text{(III),}$$

$$h_{ef;\sigma;i} = \sqrt{\frac{(h_{ef;w})^3}{(h_i + 2\varpi h_{m;i})}} \quad \text{(IV),}$$

où $h_i$ est l'épaisseur du ou de chaque substrat à fonction verrière de la plaque de vitrage feuilleté,

$h_{int\,j}$ est l'épaisseur de la ou chaque couche d'intercalaire de la plaque de vitrage feuilleté,

$h_{m;i}$ est la distance entre le plan moyen du substrat à fonction verrière $i$ et le plan moyen du vitrage feuilleté, en tenant compte des épaisseurs des couches d'intercalaire utilisées dans le vitrage feuilleté, comme montré sur les figures 1 et 10.

A partir de la comparaison des résultats obtenus, d'une part, par le modèle numérique et, d'autre part, par les formules analytiques, on ajuste la valeur du coefficient de transfert $\overline{\omega}$ jusqu'à obtenir une convergence des résultats. On construit ainsi, par itérations successives, une fonction de transfert représentative de l'évolution du coefficient de transfert $\overline{\omega}$ en fonction du module d'Young $E_{int}$ de l'intercalaire. La courbe représentative d'une telle fonction de transfert $\overline{\omega} = \mathrm{f}(E_{int})$ est montrée sur la figure 3.

On met alors la fonction de transfert en équation par une formule empirique, de manière à exprimer le coefficient de transfert $\overline{\omega}$ en fonction, non seulement des propriétés de l'intercalaire, mais également du chargement $F$ appliqué à la plaque et de paramètres physiques de la plaque de vitrage feuilleté. Cette mise en équation constitue une étape clé de l'invention, l'équation du coefficient de transfert $\overline{\omega}$ pouvant ensuite être utilisée de manière systématique pour obtenir un élément de vitrage feuilleté optimisé en termes de masse et de résistance à la charge.

À partir de la courbe représentative de la fonction de transfert obtenue précédemment, dont un exemple est montré sur la figure 3, il a été constaté que l'équation caractéristique de la fonction de transfert $\overline{\omega} = \mathrm{f}(E)$ est de la forme

$$\varpi = \frac{1}{\alpha + \dfrac{\beta}{G}} \, ,$$

où

$\alpha$ est une constante,

$\beta$ est un groupement de paramètres physiques et géométriques de la plaque,

$G$ est le module de cisaillement de l'intercalaire, qui peut être déduit à partir du coefficient de Poisson $\nu$ et du module d'Young $E_{int}$ de l'intercalaire selon l'équation $E_{int} = 2(1 + \nu)G$.

Les inventeurs ont déterminé empiriquement les paramètres de l'équation de la fonction de transfert, sur la base de résultats expérimentaux issus de mesures de flèches maximales de plaques de vitrage feuilleté, lors d'essais au vent, ainsi que sur la base de résultats de calculs numériques issus d'un modèle aux éléments finis en flexion de plaques de vitrage feuilleté. Plus précisément, les inventeurs ont étudié la sensibilité du coefficient de transfert $\overline{\omega}$ vis-à-vis de plusieurs paramètres. En première approximation, le coefficient de transfert $\overline{\omega}$ dépend de la largeur $a$ et de la longueur $b$ de la plaque, de l'épaisseur $h_i$ du ou de chaque substrat verrier de la plaque de vitrage feuilleté, de l'épaisseur $h_{int\,j}$ de la ou chaque couche d'intercalaire de la plaque de vitrage feuilleté, de la charge F uniformément répartie appliquée sur la plaque, du module d'Young $E_v$ du verre (70 GPa) et du module d'Young $E_{int}$ de l'intercalaire.

Il a été constaté que le coefficient de transfert $\overline{\omega}$ évolue linéairement en fonction de la charge appliquée à la plaque de vitrage feuilleté, quels que soient l'épaisseur et le type d'intercalaire utilisé. En effet, l'intensité de la charge gouverne l'énergie de déformation par flexion de l'assemblage et ainsi, d'une certaine manière, les efforts de cisaillement transmis d'un substrat verrier de la plaque de vitrage feuilleté à un autre. Plus la plaque de vitrage feuilleté se déforme sous l'effet de la charge, plus l'intercalaire est sollicité et sa capacité de transfert diminue. Il en découle la formulation suivante de type affine en fonction de la charge $F$ appliquée sur la plaque de vitrage feuilleté :

$$\varpi = \varphi\, F + \frac{1}{\alpha + \dfrac{\beta}{G}} \, ,$$

où la valeur de la pente $\varphi$ est fixée à $-5e^{-5}$ par interpolation des données expérimentales et numériques de flexion de plaques de vitrage feuilleté. Le rapport $\dfrac{1}{\alpha + \dfrac{\beta}{G}}$ devient alors l'ordonnée à l'origine, qui qualifie la rigidité potentielle de l'assemblage sans action extérieure.

Ces considérations conduisent à la formulation suivante pour le coefficient de transfert $\overline{\omega}$ d'une plaque de vitrage feuilleté comportant au moins un substrat à fonction verrière et au moins une couche d'intercalaire polymérique :

$$\varpi = -5e^{-5}F + \cfrac{1}{1.3 + \cfrac{0.6\, E_v \sum h_{\text{int}\,j} \sum h_i}{\sqrt{ab}\, E_{\text{int}}\, h_{tot}\, \lambda}} \qquad \text{(VII)},$$

où

$\lambda$ est le rapport $a/b$,

$h_{tot}$ est l'épaisseur totale de la plaque de vitrage feuilleté,

avec $i$ variant de 1 à n et $j$ de 1 à n-1, n représentant le nombre de substrats à fonction verrière de la plaque de vitrage feuilleté.

Cette équation (VII) exprimant le coefficient de transfert $\overline{\varpi}$ d'une plaque de vitrage feuilleté est exploitée dans le cadre du procédé de fabrication conforme à l'invention de la manière décrite ci-après et illustrée, à titre d'exemple, dans les premier et deuxième modes de réalisation ci-dessous.

Lorsque l'on souhaite fabriquer une plaque de vitrage feuilleté, par exemple la plaque de vitrage feuilleté 1 de la figure 1, pour qu'elle résiste à un chargement prédéterminé $F_0$ correspondant à une gamme de temps $t$ et à une gamme de températures T caractéristiques, on détermine tout d'abord la loi de comportement viscoélastique $E_{int}(t, \text{T})$ du matériau constitutif de l'intercalaire, en couvrant au moins les gammes de temps et de températures caractéristiques du chargement $F_0$. La loi de comportement $E_{int}(t, \text{T})$ est déterminée comme décrit précédemment, à l'aide d'un visco-analyseur, en faisant varier la fréquence et la température et en imposant un déplacement dynamique constant, et, pour les valeurs de fréquences et de températures pour lesquelles il n'est pas possible de réaliser une mesure à l'aide du visco-analyseur, en utilisant la loi d'équivalence fréquence/température établie par la méthode WLF (Williams-Landel-Ferry). En pratique, la loi de comportement $E_{int}(t, \text{T})$ est déterminée une fois pour chaque composition d'intercalaire et mise en mémoire dans une base de données de manière à pouvoir être réutilisée dans le procédé de fabrication de toute plaque de vitrage feuilleté incorporant cette composition d'intercalaire.

On calcule ensuite la valeur maximale d'au moins une grandeur représentative de la résistance à la charge de la plaque de vitrage feuilleté soumise au chargement prédéterminé $F_0$, telle que la flèche $w_{\max}$ de la plaque de vitrage feuilleté et/ou la contrainte maximale $\sigma_{max}i$ sur le ou chaque substrat à fonction verrière de la plaque. A cet effet, on utilise l'équation (VII) exprimant le coefficient de transfert $\overline{\varpi}$ de la plaque de vitrage feuilleté, en association avec des formules analytiques, par exemple les formules (V) et (VI) de calcul de la flèche et de la contrainte maximale et les formules (III) et (IV) de l'épaisseur équivalente faisant intervenir l'épaisseur d'intercalaire dans la plaque de vitrage feuilleté.

On ajuste alors les dimensions $a, b, h_i, h_{\text{int}\,j}$ de la plaque de vitrage feuilleté, de telle sorte que la valeur maximale calculée de la ou chaque grandeur $w_{\max}$, $\sigma_{max}i$ représentative de la résistance à la charge de la plaque de vitrage feuilleté est inférieure ou égale à une valeur maximale admissible, définie par exemple par une norme. La valeur maximale de la ou chaque grandeur $w_{\max}$, $\sigma_{max}i$ calculée est la valeur maximale sur les gammes de temps et de températures caractéristiques du chargement $F_0$. En pratique, la valeur maximale de la contrainte maximale $\sigma_{max}i$ calculée est la valeur maximale sur la gamme de temps caractéristiques du chargement $F_0$ car la contrainte maximale n'est pas influencée par la température sur les plages de températures considérées.

Une fois que les dimensions $a, b, h_i, h_{\text{int}\,j}$ ajustées ont été déterminées, on prépare le ou chaque substrat et la ou chaque couche d'intercalaire de la plaque de vitrage feuilleté avec les épaisseurs $h_i, h_{\text{int}\,j}$ ajustées, et on les assemble de manière à former la plaque de vitrage feuilleté de largeur $a$ et longueur $b$ également ajustées.

Les étapes de calcul décrites ci-dessus du procédé de fabrication selon l'invention peuvent être réalisées au moyen d'une unité de calcul, programmée avec un algorithme de traitement de données d'entrée, où l'algorithme fait intervenir l'équation (VII) exprimant le coefficient de transfert $\overline{\varpi}$, ainsi que des formules analytiques de calcul de la résistance à la charge d'une plaque de vitrage feuilleté, notamment les formules (V), (VI) de calcul de la flèche et de la contrainte maximale'et les formules (III), (IV) de l'épaisseur équivalente. L'unité de calcul est réalisée à partir d'un calculateur programmable conventionnel apte à exécuter des instructions enregistrées sur un support d'enregistrement d'informations. Ce support comporte des instructions pour l'exécution de l'algorithme décrit précédemment, lorsque ces instructions, qui correspondent aux étapes de calcul du procédé de fabrication selon l'invention, sont exécutées par l'unité de calcul. L'ensemble des instructions pour l'exécution de l'algorithme est intégré dans un programme ou un logiciel de dimensionnement de vitrage feuilleté, qui comprend avantageusement une interface graphique simplifiée permettant à un utilisateur d'avoir une réponse rapide et fiable concernant un problème de dimensionnement.

Selon une première approche, les données d'entrée pour l'algorithme peuvent être la loi de comportement $E_{int}(t, \text{T})$ de l'intercalaire de la plaque de vitrage feuilleté, le chargement prédéterminé $F_0$ appliqué à la plaque de vitrage feuilleté et les dimensions $a, b, h_i, h_{\text{int}\,j}$ de la plaque. L'unité de calcul est alors prévue pour fournir, en sortie, les valeurs calculées de grandeurs représentatives de la résistance à la charge de la plaque de vitrage feuilleté considérée, notamment la flèche de la plaque et/ou la contrainte maximale sur chaque substrat verrier $i$ de l'élément. Cette première approche permet de vérifier qu'une plaque de vitrage feuilleté de dimensions données est correctement dimensionnée pour une application. Avec cette première approche, il est également possible, en modifiant pas à pas les dimensions $a$, $b$, $h_i$, $h_{int\,j}$ de la plaque fournies en tant que données d'entrée pour l'algorithme, d'ajuster par itération les dimensions de la plaque de telle sorte que la valeur maximale calculée de la ou chaque grandeur $w_{max}$, $\sigma_{max}i$ représentative de la résistance à la charge de la plaque de vitrage feuilleté est inférieure ou égale à une valeur maximale admissible correspondante, cette valeur maximale admissible étant par exemple définie par une norme.

Selon une deuxième approche, dans une optique d'optimisation directe du dimensionnement de la plaque de vitrage feuilleté, les données d'entrée pour l'algorithme peuvent être la loi de comportement $E_{int}(t,\,T)$ de l'intercalaire de la plaque de vitrage feuilleté, le chargement prédéterminé $F_0$ appliqué à la plaque de vitrage feuilleté, la valeur maximale admissible d'une ou plusieurs grandeurs représentatives de la résistance à la charge de la plaque de vitrage feuilleté, notamment la flèche de la plaque et/ou la contrainte maximale sur chaque substrat verrier $i$ de l'élément, et certaines parmi les dimensions $a$, $b$, $h_i$ ou $h_{int\,j}$ de la plaque de vitrage feuilleté. Les valeurs maximales admissibles de grandeurs représentatives de la résistance à la charge de la plaque de vitrage feuilleté sont par exemple définies par une norme. L'unité de calcul est alors prévue pour fournir, en sortie, des valeurs ajustées des autres dimensions $a$, $b$, $h_i$ ou $h_{int\,j}$ de la plaque de vitrage feuilleté qui n'avaient pas été fournies en tant que données d'entrée pour l'algorithme, ces valeurs ajustées étant adaptées de telle sorte que la valeur maximale calculée de la ou chaque grandeur $w_{max}$, $\sigma_{max}i$ représentative de la résistance à la charge de la plaque de vitrage feuilleté est inférieure ou égale à la valeur maximale admissible correspondante fournie en entrée.

Selon un premier exemple de mise en oeuvre du procédé de fabrication selon l'invention, on cherche à dimensionner la plaque de vitrage feuilleté 1 représentée sur la figure 1. La plaque 1 est destinée à être positionnée à l'horizontale sur la toiture d'un bâtiment et à être soumise à une charge de neige de 650 Pa. Dans cet exemple, la plaque 1 a une largeur $a$ et une longueur $b$ de 1,5 m, et les deux substrats en verre 2 et 4 ont des épaisseurs respectives $h_1$ de 6 mm et $h_2$ de 4 mm. La couche d'intercalaire 3 est une couche d'intercalaire dit structurel, dont on souhaite déterminer l'épaisseur $h_{int1}$ pour satisfaire à des critères d'admissibilité en termes de résistance à la charge de la plaque 1.

Dans ce type d'utilisation, on s'intéresse plus particulièrement à la valeur de la contrainte maximale $\sigma_{max}i$ dans les substrats verriers 2 et 4, qui est le critère le plus limitant compte tenu de la fatigue statique du verre sous une charge de longue durée, ce qui est le cas d'une charge de neige.

Le tableau 1 ci-dessous présente les résultats obtenus par calcul dans le cadre de la méthode classique de détermination de la résistance à la charge d'un élément de vitrage feuilleté sans tenir compte de l'épaisseur d'intercalaire. La valeur du coefficient de transfert $\overline{\omega}$ considérée est la valeur approximative proposée dans le projet de norme européenne prEN 13474 pour les intercalaires dits structurels et pour un chargement de neige.

**Tableau 1**

| | Etat Limite Ultime | Etat Limite de Service |
|---|---|---|
| **Charge** | 1127 Pa | 885 Pa |
| **Critère Normatif** | contrainte maximale admissible pour le verre **10,1** MPa | flèche admissible de la plaque **15** mm |
| **Résultat** | contrainte calculée pour le 6mm **11,2** MPa | flèche calculée **6,5** mm |
| | contrainte calculée pour le 4mm **8,5** MPa | |

Il ressort du tableau 1 que la contrainte dans le substrat verrier 2 ayant une épaisseur de 6 mm dépasse le critère admissible et ce, quelle que soit l'épaisseur de l'intercalaire puisque, dans la méthode classique, l'épaisseur de l'intercalaire n'est pas prise en compte dans la formulation de l'épaisseur équivalente. Ainsi, avec la méthode classique, il apparaît nécessaire d'augmenter l'épaisseur de verre dans la plaque de vitrage feuilleté pour qu'elle respecte les critères d'admissibilité en termes de résistance à la charge.

Le tableau 2 ci-dessous présente les résultats obtenus par calcul dans le cadre du procédé de fabrication conforme à l'invention, pour une plaque de vitrage feuilleté 1 comportant les deux substrats en verre 2 et 4 d'épaisseurs respectives $h_1$ de 6 mm et $h_2$ de 4 mm et une couche 3 d'intercalaire structurel d'épaisseur $h_{int1}$ de 0,76 mm, disposée de manière solidaire contre les substrats 2 et 4. La plaque 1 est alors une plaque dite de type « 64-2 », car elle comporte deux substrats en verre d'épaisseurs respectives 6 mm et 4 mm et deux plis d'intercalaire.

**Tableau 2**

| | Etat Limite Ultime | | Etat Limite de Service |
|---|---|---|---|
| **Charge** | 1127 Pa | | 885 Pa |
| **Critère** | contrainte maximale admissible pour le verre **10,1** MPa | | flèche admissible de la plaque **15** mm |
| **Résultat** | contrainte calculée pour le 6mm **9,5** MPa | | flèche calculée **5,6** mm |
| | contrainte calculée pour le 4mm **7,4** MPa | | |

Comme montré dans le tableau 2, la prise en compte de l'épaisseur d'intercalaire dans la plaque de vitrage feuilleté, ainsi que le calcul du coefficient de transfert $\overline{\omega}$ selon l'équation (VII), conduit à un dimensionnement dans le respect des critères.

Il ressort de ce premier mode de réalisation que la prise en compte de l'épaisseur d'intercalaire dans le dimensionnement des éléments de vitrage feuilleté, comme cela est prévu dans le cadre du procédé de fabrication conforme à l'invention, permet de prévoir une composition verrière plus fine de l'élément de vitrage feuilleté, qui répond aux critères d'admissibilité en termes de résistance à la charge.

Dans le deuxième mode de réalisation illustré notamment sur les figures 4 et 5, on cherche à vérifier la résistance mécanique de la plaque de vitrage feuilleté 1 représentée sur la figure 1, ayant une largeur *a* de 2 m et une longueur *b* de 3 m, soumise à une charge de vent comprise entre 0 et 1200 Pa. Chacun des deux substrats en verre 2 et 4 de la plaque 1 a une épaisseur $h_1$, $h_2$ de 4 mm.

La figure 4 montre l'évolution de la flèche maximale $w_{max}$ de la plaque 1, en fonction de la charge de vent appliquée sur la plaque, lorsque la plaque 1 comporte une couche 3 d'intercalaire standard d'épaisseur $h_{int1}$ de 0,76 mm, disposée de manière solidaire contre les substrats verriers 2 et 4. La plaque 1 est alors une plaque dite de type « 44-2 », car elle comporte deux substrats en verre d'épaisseur 4 mm chacun et deux plis d'intercalaire. La figure 4 montre les résultats obtenus respectivement par une mesure expérimentale (44-2 exp), par calcul dans le cadre de la méthode classique de détermination de la résistance à la charge d'un élément de vitrage feuilleté sans tenir compte de l'épaisseur d'intercalaire dans le vitrage feuilleté (44-i calc) et par calcul dans le cadre du procédé de fabrication conforme à l'invention (44-2 calc).

La figure 5 montre l'évolution de la flèche maximale $w_{max}$ de la plaque 1, en fonction de la charge de vent appliquée sur la plaque, lorsque la plaque 1 comporte une couche 3 d'intercalaire structurel disposée de manière solidaire contre les substrats verriers 2 et 4 d'épaisseur 4 mm chacun, la couche 3 ayant une épaisseur $h_{int1}$ soit de 0, 38 mm, correspondant à un pli d'intercalaire, soit de 0,76 mm, correspondant à deux plis d'intercalaire. Dans le premier cas, la plaque 1 est dite de type « 44-1 » et dans le deuxième cas, elle est dite de type « 44-2 », comme précédemment. La figure 5 montre les résultats obtenus respectivement par une mesure expérimentale (44-1 exp, 44-2 exp), par calcul dans le cadre de la méthode classique de détermination de la résistance à la charge d'un élément de vitrage feuilleté sans tenir compte de l'épaisseur d'intercalaire dans le vitrage feuilleté (44-i calc) et par calcul dans le cadre du procédé de fabrication conforme à l'invention (44-1 calc, 44-2 calc).

Il ressort d'une comparaison des résultats montrés sur les figures 4 et 5 que les prédictions de la flèche maximale sont plus précises dans le cadre du procédé de fabrication conforme à l'invention, grâce à la prise en compte de l'épaisseur d'intercalaire dans la plaque de vitrage feuilleté. Les exemples des figures 4 et 5 illustrent ainsi la valeur ajoutée du procédé selon l'invention, qui résulte d'une meilleure évaluation du rôle mécanique de l'intercalaire.

Toujours dans le cadre de ce deuxième mode de réalisation, on a représenté sur la figure 6 un graphique en trois dimensions, représentatif de l'épaisseur équivalente pour le calcul de la flèche d'une plaque rectangulaire de vitrage feuilleté de type « 44-2 », en fonction à la fois de la charge de vent *F* appliquée sur la plaque, à laquelle la plaque doit résister, et du rapport $\lambda$ = *a*/*b* de la largeur sur la longueur de la plaque. Dans cet exemple, la plaque de vitrage feuilleté a une longueur de 3 m et comporte deux substrats en verre d'épaisseur 4 mm chacun et deux plis d'intercalaire structurel, c'est-à-dire une couche d'intercalaire d'épaisseur 0,76 mm. La figure 6 montre l'épaisseur équivalente de la plaque requise pour satisfaire aux critères d'admissibilité en termes de résistance à la charge de la plaque, respectivement pour une plaque de dimensions ajustées conformément à l'invention ($h_{e1}$) et pour une plaque nominale correspondante de l'état de la technique ($h_{e2}$).

Au sens de l'invention, on entend par plaque de vitrage feuilleté nominale correspondant à une plaque de vitrage feuilleté conforme à l'invention, une plaque de vitrage feuilleté fabriquée pour résister au même chargement *F* que la plaque conforme à l'invention, mais par une méthode classique de fabrication dans laquelle l'épaisseur équivalente de la plaque de vitrage feuilleté, à partir de laquelle des grandeurs représentatives de la résistance à la charge de la plaque sont calculées, par exemple selon les formules (V) et (VI) précitées, est indépendante de l'épaisseur $h_{int1}$ de la couche d'intercalaire 3 de la plaque.

La figure 6 illustre bien que, pour un même chargement *F* auquel la plaque doit résister, la plaque de vitrage feuilleté conforme à l'invention a une épaisseur équivalente requise $h_{e1}$ qui est supérieure ou égale à l'épaisseur équivalente requise $h_{e2}$ de la plaque de vitrage feuilleté nominale correspondante de l'état de la technique. Dès lors, comme il ressort de la formule (III) de l'épaisseur équivalente, pour un même chargement $F$ appliqué sur la plaque, la plaque de vitrage feuilleté conforme à l'invention peut avoir une épaisseur d'intercalaire $h_{\text{int } j}$ et/ou une épaisseur de substrat $h_i$ réduites par rapport, respectivement, à l'épaisseur d'intercalaire et à l'épaisseur de substrat de la plaque de vitrage feuilleté nominale correspondante, les autres dimensions de la plaque de vitrage feuilleté, à savoir sa largeur $a$ et sa longueur $b$, ainsi que celle éventuellement parmi son épaisseur d'intercalaire ou son épaisseur de substrat qui n'est pas réduite, étant gardées égales à celles de la plaque de vitrage feuilleté nominale correspondante.

Il en résulte que la masse d'une plaque de vitrage feuilleté selon l'invention, destinée à résister à un chargement prédéterminé, est inférieure à celle d'une plaque de vitrage feuilleté nominale correspondante de l'état de la technique destinée à résister au même chargement prédéterminé. Dans le cas où la plaque de vitrage feuilleté est multi feuilletée, on entend par épaisseur d'intercalaire la somme des épaisseurs des couches d'intercalaires de la plaque de vitrage feuilleté, et par épaisseur de substrat la somme des épaisseurs des substrats à fonction verrière de la plaque de vitrage feuilleté.

Les figures 7 à 9 illustrent le gain $\Delta h_e$ en termes d'épaisseur équivalente, par rapport à l'épaisseur équivalente d'une plaque de vitrage feuilleté nominale correspondante de l'état de la technique et en fonction à la fois de la charge de vent appliquée sur la plaque et du rapport $\lambda = a/b$ de la largeur sur la longueur de la plaque, respectivement :

- sur la figure 7, pour la plaque de vitrage feuilleté conforme à l'invention considérée sur la figure 6,
- sur la figure 8, pour une plaque de vitrage feuilleté conforme à l'invention qui diffère de la plaque considérée sur la figure 6 uniquement en ce qu'elle comporte deux plis d'intercalaire standard au lieu de deux plis d'intercalaire structurel, et
- sur la figure 9, pour une plaque de vitrage feuilleté conforme à l'invention qui diffère de la plaque considérée sur la figure 6 uniquement en ce qu'elle comporte deux plis d'intercalaire acoustique au lieu de deux plis d'intercalaire structurel.

Il ressort de ces graphes que l'épaisseur équivalente d'un élément de vitrage feuilleté conforme à l'invention, quelle que soit la composition de sa ou ses couches d'intercalaire, est supérieure ou égale à l'épaisseur équivalente d'un élément de vitrage feuilleté nominal correspondant, ce qui rend possible une réduction de la masse de l'élément de vitrage feuilleté selon l'invention, destiné à résister à un chargement prédéterminé, par rapport à l'élément de vitrage feuilleté nominal correspondant.

Il est bien entendu que l'augmentation de l'épaisseur équivalente d'un élément de vitrage feuilleté selon l'invention, si elle est illustrée sur l'exemple spécifique d'une plaque de vitrage feuilleté de type « 44-2 » de longueur 3 m, est transposable à d'autres éléments de vitrage feuilleté, notamment des éléments de vitrage feuilleté de dimensions $a$, $b$, $h_i$, $h_{\text{int } j}$ différentes.

Comme il ressort des premier et deuxième modes de réalisation décrits ci-dessus, le procédé de fabrication conforme à l'invention permet d'obtenir un élément de vitrage feuilleté ayant à la fois une résistance à la charge et des dimensions optimales. Au sens de l'invention, des dimensions optimales de l'élément de vitrage feuilleté correspondent à une composition en substrat verrier et en intercalaire optimisée, de sorte que la structure de l'élément de vitrage feuilleté peut être allégée par rapport à celle d'éléments de vitrage feuilleté fabriqués selon une méthode classique ne tenant pas compte de l'épaisseur d'intercalaire dans le vitrage feuilleté. Un tel allégement de la structure d'éléments de vitrage feuilleté conformes à l'invention est particulièrement avantageux pour des applications en toiture.

Le procédé selon l'invention permet d'évaluer rapidement le comportement en flexion d'un élément de vitrage feuilleté, quelles que soient la gamme de temps et la gamme de températures caractéristiques du chargement appliqué à l'élément de vitrage feuilleté. En effet, une fois que la loi de comportement viscoélastique du matériau constitutif de l'intercalaire a été déterminée, à partir de mesures réalisées au moyen d'un visco-analyseur et de la loi d'équivalence fréquence/température établie par la méthode WLF, la résistance à la charge de l'élément de vitrage feuilleté est facilement calculée en utilisant l'équation du coefficient de transfert $\overline{\omega}$, en association avec des formules analytiques. En particulier, le procédé selon l'invention offre la possibilité d'évaluer facilement et rapidement la performance de nouveaux matériaux intercalaire, après les avoir caractérisés par une simple mesure au visco-analyseur, sans qu'il soit nécessaire de passer par un essai coûteux.

Comme décrit précédemment, les instructions pour la mise en oeuvre des étapes de calcul du procédé de fabrication selon l'invention peuvent être inscrites sur un support d'enregistrement. Le procédé conforme à l'invention peut alors être intégré au sein d'une interface graphique simplifiée permettant à un utilisateur d'avoir une réponse rapide et fiable concernant un problème de dimensionnement de vitrage feuilleté.

L'invention n'est pas limitée aux exemples décrits et représentés. En particulier, le procédé selon l'invention peut être mis en oeuvre pour la fabrication d'une plaque de vitrage feuilleté comportant plusieurs feuillets, comme illustré par la plaque 10 de la figure 10. Cette plaque 10 comporte trois substrats à fonction verrière 12, 14, 16 et deux couches d'intercalaire 13, 15, disposées chacune de manière solidaire entre deux substrats.

De plus, dans les exemples précédents, les plaques de vitrage feuilleté considérées comportent des substrats en verre et des couches d'intercalaires en PVB. De manière plus générale, le procédé selon l'invention peut être utilisé pour la fabrication de plaques de vitrage feuilleté comportant des substrats à fonction verrière de tout type, notamment constitués en verre ou en plastique, et pour la fabrication de plaques de vitrage feuilleté comportant des couches d'intercalaire constituées en tout matériau viscoélastique de propriétés adaptées, notamment de type polymères acryliques ou résines d'acétal. Il convient alors d'adapter les paramètres des matériaux dans l'équation du coefficient de transfert.

De même, l'invention a été décrite dans le cadre de la fabrication de plaques de vitrage feuilleté. Toutefois, le procédé conforme à l'invention peut être mis en oeuvre pour la fabrication de tout élément de vitrage feuilleté, en particulier d'éléments de vitrage feuilleté se présentant sous une forme différente d'une plaque, les formules analytiques de calcul de la résistance à la charge devant alors être adaptées en conséquence.

## Revendications

1. Procédé de fabrication d'un élément de vitrage feuilleté (1 ; 10) pour qu'il résiste à un chargement prédéterminé ($F_0$) correspondant à une gamme de temps ($t$) et à une gamme de températures (T) caractéristiques, l'élément de vitrage feuilleté (1 ; 10) comportant au moins un substrat à fonction verrière (2, 4 ; 12, 14, 16) et au moins une couche d'intercalaire polymérique (3 ; 13, 15), **caractérisé en ce qu'**il comprend des étapes dans lesquelles :

    - on obtient la loi de comportement viscoélastique du matériau constitutif de l'intercalaire ($E_{int}(t, T)$) sur les gammes de temps et de températures caractéristiques du chargement prédéterminé ($F_0$) ;
    - on calcule la valeur maximale d'au moins une grandeur ($w_{max}$ ; $\sigma_{max}i$) représentative de la résistance à la charge de l'élément de vitrage feuilleté (1 ; 10) soumis audit chargement prédéterminé ($F_0$), en utilisant - un modèle analytique dans lequel la participation de l'intercalaire au transfert du cisaillement dans l'élément de vitrage feuilleté est représentée par un coefficient de transfert ($\overline{\omega}$), et - une équation exprimant le coefficient de transfert ($\overline{\omega}$) en fonction du module d'Young ($E_{int}$) de l'intercalaire, du chargement ($F$) appliqué à l'élément de vitrage feuilleté et des dimensions ($a, b, h_i, h_{int\,j}$) de l'élément de vitrage feuilleté ;
    - on ajuste les dimensions ($a, b, h_i, h_{int\,j}$) de l'élément de vitrage feuilleté (1 ; 10) de telle sorte que la valeur maximale calculée de la grandeur ($w_{max}$ ; $\sigma_{max}i$) représentative de la résistance à la charge de l'élément de vitrage feuilleté (1 ; 10) est inférieure ou égale à une valeur maximale admissible ;
    - on prépare et on assemble le substrat (2, 4 ; 12, 14, 16) et la couche d'intercalaire (3; 13, 15) de l'élément de vitrage feuilleté (1 ; 10) auxdites dimensions ($a, b, h_i, h_{int\,j}$) ajustées.

2. Procédé de fabrication selon la revendication 1, **caractérisé en ce que**, pour la détermination de la loi de comportement ($E_{int}(t, T)$) du matériau constitutif de l'intercalaire, on mesure le module d'Young ($E_{int}$) sur un échantillon de l'intercalaire à l'aide d'un visco-analyseur, en faisant varier la fréquence ($f = 1/t$) et la température (T) et en imposant un déplacement dynamique constant, et on utilise la loi d'équivalence fréquence/température établie par la méthode WLF (Williams-Landel-Ferry).

3. Procédé de fabrication selon l'une quelconque des revendications 1 ou 2, **caractérisé en ce qu'**on détermine la loi de comportement ($E_{int}(t, T)$) du matériau constitutif de l'intercalaire (3) pour une gamme de fréquences ($f = 1/t$) comprises entre $5.10^{-7}$ Hz et $3.10^{-1}$ Hz et une gamme de températures (T) comprises entre -20°C et 60°C.

4. Procédé de fabrication selon l'une quelconque des revendications précédentes, **caractérisé en ce qu'**on calcule, en tant que grandeurs représentatives de la résistance à la charge de l'élément de vitrage feuilleté (1 ; 10) :

    o la flèche ($w_{max}$) de l'élément de vitrage feuilleté (1 ; 10), à partir de l'épaisseur équivalente $h_{ef;w}$ du vitrage feuilleté telle que :

$$h_{ef;w} = \sqrt[3]{(1-\varpi)\left(\sum_i h_i^3 + \sum_j h_{int\,j}^3\right) + \varpi\left(\sum_i h_i + \sum_j h_{int\,j}\right)^3} \ ,$$

    et/ou
    o la contrainte maximale ($\sigma_{max}i$) sur le ou chaque substrat à fonction verrière de l'élément de vitrage feuilleté (1 ; 10), à partir de l'épaisseur équivalente $h_{ef,\sigma,i}$ du vitrage feuilleté telle que :

$$h_{ef;\sigma;i} = \sqrt{\frac{\left(h_{ef;w}\right)^3}{\left(h_i + 2\varpi h_{m;i}\right)}} \ ,$$

où

$h_i$ : épaisseur du ou de chaque substrat à fonction verrière (2, 4 ; 12, 14,16),

$h_{\text{int }j}$ : épaisseur de la ou de chaque couche d'intercalaire (3 ; 13, 15),

$h_{m;i}$ : distance entre le plan moyen du substrat à fonction verrière $i$ et le plan moyen du vitrage feuilleté (1 ; 10).

5. Procédé de fabrication selon l'une quelconque des revendications précédentes, **caractérisé en ce qu'**on détermine ladite équation exprimant le coefficient de transfert ($\overline{\omega} = \mathrm{f}(E_{int}, F, a, b, h_i, h_{\text{int }j})$), valable pour tout élément de vitrage feuilleté comportant au moins un substrat à fonction verrière et au moins une couche d'intercalaire polymérique, selon les étapes suivantes :

- on obtient la loi de comportement viscoélastique ($E_{int}(t, \mathrm{T})$) du matériau constitutif de l'intercalaire de l'élément de vitrage feuilleté ;
- on réalise un modèle numérique par éléments finis en flexion de l'élément de vitrage feuilleté, en utilisant la loi de comportement ($E_{int}(t, \mathrm{T})$) du matériau constitutif de l'intercalaire pour définir les propriétés mécaniques de l'intercalaire ;
- on compare les résultats obtenus, d'une part, avec le modèle numérique et, d'autre part, avec un modèle analytique dans lequel la participation de l'intercalaire au transfert du cisaillement est représentée par un coefficient de transfert ($\overline{\omega}$), et on ajuste la valeur du coefficient de transfert ($\overline{\omega}$) jusqu'à convergence de ces résultats ;
- on construit par itérations successives une fonction de transfert représentative de l'évolution du coefficient de transfert ($\overline{\omega}$) en fonction du module d'Young ($E_{int}$) de l'intercalaire ;
- on met la fonction de transfert en équation de telle sorte que le coefficient de transfert ($\overline{\omega}$) est exprimé en fonction du module d'Young ($E_{int}$) de l'intercalaire, du chargement ($F$) appliqué à l'élément de vitrage feuilleté et des dimensions ($a, b, h_i, h_{\text{int }j}$) de l'élément de vitrage feuilleté ;
- on détermine empiriquement les paramètres de l'équation exprimant le coefficient de transfert ($\overline{\omega}$) en fonction du module d'Young ($E_{int}$) de l'intercalaire, du chargement ($F$) appliqué à l'élément de vitrage feuilleté et des dimensions ($a, b, h_i, h_{\text{int }j}$) de l'élément de vitrage feuilleté.

6. Procédé de fabrication selon l'une quelconque des revendications précédentes, **caractérisé en ce que** l'élément de vitrage feuilleté (1 ; 10) est une plaque rectangulaire, les dimensions de l'élément de vitrage feuilleté (1 ; 10) qui interviennent dans ladite équation exprimant le coefficient de transfert ($\overline{\omega} = \mathrm{f}(E_{int}, F, a, b, h_i, h_{\text{int }j})$) étant la largeur ($a$) et la longueur ($b$) de la plaque, l'épaisseur ($h_i$) du ou de chaque substrat à fonction verrière (2, 4 ; 12, 14, 15) et l'épaisseur ($h_{\text{int }j}$) de la ou de chaque couche d'intercalaire (3 ; 13, 15).

7. Support d'enregistrement d'informations, **caractérisé en ce qu'**il comporte des instructions pour la mise en oeuvre des étapes de calcul d'un procédé de fabrication d'un élément de vitrage feuilleté selon l'une quelconque des revendications précédentes lorsque ces instructions sont exécutées par une unité de calcul électronique, lesdites instructions comprenant une instruction de calcul de la valeur maximale d'au moins une grandeur ($w_{\max}$ ; $\sigma_{max}i$) représentative de la résistance à la charge de l'élément de vitrage feuilleté (1 ; 10) soumis audit chargement prédéterminé ($F_0$), en utilisant - un modèle analytique dans lequel la participation de l'intercalaire au transfert du cisaillement dans l'élément de vitrage feuilleté est représentée par un coefficient de transfert ($\overline{\omega}$), et - une équation exprimant le coefficient de transfert ($\overline{\omega}$) en fonction du module d'Young ($E_{int}$) de l'intercalaire, du chargement ($F$) appliqué à l'élément de vitrage feuilleté et des dimensions ($a, b, h_i, h_{\text{int }j}$) de l'élément de vitrage feuilleté.

8. Support d'enregistrement d'informations selon la revendication 7, **caractérisé en ce que** lesdites instructions comprennent, suite à l'instruction de calcul de la valeur maximale d'au moins une grandeur ($w_{\max}$ ; $\sigma_{max}i$) représentative de la résistance à la charge de l'élément de vitrage feuilleté (1 ; 10) soumis audit chargement prédéterminé ($F_0$), une instruction de calcul de valeurs ajustées de dimensions ($a, b, h_i, h_{\text{int }j}$) de l'élément de vitrage feuilleté (1 ; 10) de telle sorte que la valeur maximale calculée de la grandeur représentative ($w_{\max}$ ; $\sigma_{max}i$) est inférieure ou égale à une valeur maximale admissible de cette grandeur représentative ($w_{\max}$ ; $\sigma_{max}i$).

**Patentansprüche**

1. Verfahren zur Herstellung eines Verbundverglasungselements (1; 10), damit es einer vorbestimmten Belastung ($F_0$), die einem charakteristischen Zeitbereich (t) und einem charakteristischen Temperaturbereich (T) entspricht, standhält, wobei das Verbundverglasungselement (1; 10) wenigstens ein Substrat mit Glasfunktion (2, 4; 12, 14, 16) und wenigstens eine polymere Zwischenschicht (3; 13, 15) umfasst, **dadurch gekennzeichnet, dass** es die Schritte umfasst, bei denen:

   - der Verlauf des viskoelastischen Verhaltens des die Zwischenschicht bildenden Materials ($E_{int}$(t, T)) über die charakteristischen Zeit- und Temperaturbereiche der vorbestimmten Belastung ($F_0$) erhalten wird;
   - der Maximalwert wenigstens einer Größe ($w_{\max}$; $\sigma_{max}i$), die für den Belastungswiderstand des der vorbestimmten Belastung ($F_0$) ausgesetzten Verbundverglasungselements (1; 10) repräsentativ ist, berechnet wird unter Verwendung eines analytischen Modells, bei dem die Beteiligung der Zwischenschicht an der Übertragung der Scherkraft in dem Verbundverglasungselement durch einen Übertragungskoeffizienten ($\omega$) dargestellt ist, und einer Gleichung, die den Übertragungskoeffizienten ($\omega$) in Abhängigkeit von dem Elastizitätsmodul ($E_{int}$) der Zwischenschicht, der an das Verbundverglasungselement angelegten Belastung (F) und den Abmessungen (a, b, $h_i$, $h_{int\,j}$) des Verbundverglasungselements ausdrückt;
   - die Abmessungen (a, b, $h_i$, $h_{int\,j}$) des Verbundverglasungselements (1; 10) derart eingestellt werden, dass der berechnete Maximalwert der Größe ($w_{\max}$; $\sigma_{max}i$), die für den Belastungswiderstand des Verbundverglasungselements (1; 10) repräsentativ ist, kleiner als ein oder gleich einem zulässigen Maximalwert ist;
   - das Substrat (2, 4; 12, 14, 16) und die Zwischenschicht (3; 13, 15) des Verbundverglasungselements (1; 10) mit den eingestellten Abmessungen (a, b, $h_i$, $h_{int\,j}$) hergestellt und verbunden werden.

2. Herstellungsverfahren nach Anspruch 1, **dadurch gekennzeichnet, dass** für die Bestimmung des Verhaltensverlaufs ($E_{int}$(t, T)) des die Zwischenschicht bildenden Materials der Elastizitätsmodul ($E_{int}$) an einer Probe der Zwischenschicht mit Hilfe eines Viskoanalysators unter Variieren der Frequenz (f = 1/t) und der Temperatur (T) sowie unter Auferlegen einer konstanten dynamischen Bewegung gemessen wird, und das mittels der WLF-Methode (Williams-Landel-Ferry) erstellte Frequenz/Temperatur-Äquivalenzgesetz verwendet wird.

3. Herstellungsverfahren nach einem der Ansprüche 1 oder 2, **dadurch gekennzeichnet, dass** der Verhaltensverlauf ($E_{int}$(t, T)) des die Zwischenschicht (3) bildenden Materials für einen Frequenzbereich (f = 1/t) zwischen $5.10^{-7}$ Hz und $3.10^{-1}$ Hz und einen Temperaturbereich (T) zwischen -20 °C und 60 °C bestimmt wird.

4. Herstellungsverfahren nach einem der vorhergehenden Ansprüche, **dadurch gekennzeichnet, dass** als Größen, die für den Belastungswiderstand des Verbundverglasungselements (1; 10) repräsentativ sind, berechnet werden:

   - die Durchbiegung ($w_{\max}$) des Verbundverglasungselements (1; 10) anhand der Äquivalentdicke $h_{ef;w}$ der Verbundverglasung, die derart ist, dass:

$$h_{ef;w} = \sqrt[3]{(1-\varpi)\left(\sum_i h_i^3 + \sum_j h_{int\,j}^3\right) + \varpi\left(\sum_i h_i + \sum_j h_{int\,j}\right)^3} \ ,$$

   und/oder
   - die maximale Spannung ($\sigma_{max}i$) an dem oder jedem Substrat mit Glasfunktion des Verbundverglasungselements (1; 10) anhand der Äquivalentdicke $h_{ef;\sigma;i}$ der Verbundverglasung, die derart ist, dass:

$$h_{ef;\sigma;i} = \sqrt{\frac{(h_{ef;w})^3}{(h_i + 2\varpi h_{m;i})}} \ ,$$

   worin

$h_i$: Dicke des oder jedes Substrats mit Glasfunktion (2, 4; 12, 14, 16),

$h_{int\,j}$: Dicke der oder jeder Zwischenschicht (3; 13, 15),

$h_{m;i}$ Abstand zwischen der Mittelebene des Substrats mit Glasfunktion i und der Mittelebene der Verbundverglasung (1; 10).

**5.** Herstellungsverfahren nach einem der vorhergehenden Ansprüche, **dadurch gekennzeichnet, dass** die den Übertragungskoeffizienten ausdrückende Gleichung ($\omega = f(E_{int}, F, a, b, h_i, h_{int\,j})$), die für jedes Verbundverglasungselement, das wenigstens ein Substrat mit Glasfunktion und wenigstens eine polymere Zwischenschicht umfasst, gültig ist, nach den folgenden Schritten bestimmt wird:

- man erhält den Verlauf des viskoelastischen Verhaltens ($E_{int}(t, T)$) des die Zwischenschicht des Verbundverglasungselements bildenden Materials;
- es wird ein digitales Finite-Elemente-Biegemodell des Verbundverglasungselements unter Verwendung des Verhaltensverlaufs ($E_{int}(t, T)$) des die Zwischenschicht bildenden Materials erstellt, um die mechanischen Eigenschaften der Zwischensicht zu definieren;
- die erzielten Ergebnisse werden einerseits mit dem digitalen Modell und andererseits mit einem analytischen Modell verglichen, bei dem die Beteiligung der Zwischenschicht an der Übertragung der Scherkraft durch einen Übertragungskoeffizienten (co) dargestellt ist, und der Wert des Übertragungskoeffizienten ($\omega$) wird bis zur Übereinstimmung dieser Ergebnisse angeglichen;
- durch aufeinanderfolgende Iterationen wird eine Übertragungsfunktion konstruiert, die für die Entwicklung des Übertragungskoeffizienten ($\omega$) in Abhängigkeit von dem Elastizitätsmodul ($E_{int}$) der Zwischensicht repräsentativ ist;
- die Übertragungsfunktion-Gleichung wird derart aufgestellt, dass der Übertragungskoeffizient ($\omega$) in Abhängigkeit von dem Elastizitätsmodul ($E_{int}$) der Zwischenschicht, der an das Verbundverglasungselement angelegten Belastung (F) und den Abmessungen (a, b, $h_i$, $h_{int\,j}$) des Verbundverglasungselements ausgedrückt wird;
- die Parameter der Gleichung, die den Übertragungskoeffizienten ($\omega$) in Abhängigkeit von dem Elastizitätsmodul ($E_{int}$) der Zwischenschicht, der an das Verbundverglasungselement angelegten Belastung (F) und den Abmessungen (a, b, $h_i$, $h_{int\,j}$) des Verbundverglasungselements ausdrückt, werden empirisch bestimmt.

**6.** Herstellungsverfahren nach einem der vorhergehenden Ansprüche, **dadurch gekennzeichnet, dass** das Verbundverglasungselement (1; 10) eine rechteckige Platte ist, wobei die Abmessungen des Verbundverglasungselements (1; 10), die in der den Übertragungskoeffizienten ausdrückenden Gleichung ($\omega = f(E_{int}, F, a, b, h_i, h_{int\,j})$) auftreten, die Breite (a) und die Länge (b) der Platte, die Dicke ($h_i$) des oder jedes Substrats mit Glasfunktion (2, 4; 12, 14, 16) und die Dicke ($h_{int\,j}$) des oder jeder Zwischenschicht (3; 13, 15) sind.

**7.** Träger zum Speichern von Informationen, **dadurch gekennzeichnet, dass** er Befehle für die Durchführung der Berechnungsschritte eines Verfahrens zur Herstellung eines Verbundverglasungselements nach einem der vorhergehenden Ansprüche enthält, wenn diese Befehle durch eine elektronische Recheneinheit ausgeführt werden, wobei die Befehle einen Befehl umfassen zur Berechnung des Maximalwertes wenigstens einer Größe ($w_{max}$; $\sigma_{max}i$), die für den Belastungswiderstand des der vorbestimmten Belastung ($F_0$) ausgesetzten Verbundverglasungselements (1; 10) repräsentativ ist, unter Verwendung eines analytischen Modells, bei dem die Beteiligung der Zwischenschicht an der Übertragung der Scherkraft in dem Verbundverglasungselement durch einen Übertragungskoeffizienten ($\omega$) dargestellt ist, und einer Gleichung, die den Übertragungskoeffizienten ($\omega$) in Abhängigkeit von dem Elastizitätsmodul ($E_{int}$) der Zwischenschicht, der an das Verbundverglasungselement angelegten Belastung (F) und den Abmessungen (a, b, $h_i$, $h_{int\,j}$) des Verbundverglasungselements ausdrückt.

**8.** Träger zum Speichern von Informationen nach Anspruch 7, **dadurch gekennzeichnet, dass** die Befehle im Anschluss an den Befehl zur Berechnung des Maximalwertes wenigstens einer Größe ($w_{max}$; $\sigma_{max}i$), die für den Belastungswiderstand des der vorbestimmten Belastung ($F_0$) ausgesetzten Verbundverglasungselements (1; 10) repräsentativ ist, einen Befehl umfassen zur Berechnung von eingestellten Werten von Abmessungen (a, b, $h_i$, $h_{int\,j}$) des Verbundverglasungselements (1; 10), derart, dass der berechnete Maximalwert der repräsentativen Größe ($w_{max}$; $\sigma_{max}i$) kleiner als ein oder gleich einem zulässigen Maximalwert dieser repräsentativen Größe ($w_{max}$; $\sigma_{max}i$) ist.

**Claims**

**1.** A process for manufacturing a laminated glazing unit (1; 10) so that it withstands a predetermined load ($F_0$) corresponding to a characteristic time (*t*) range and to a characteristic temperature (T) range, the laminated glazing unit (1; 10) comprising at least one substrate (2, 4; 12, 14, 16) having a glass function and at least one layer of polymeric interlayer (3; 13, 15), **characterized in that** it comprises steps in which:

- the law describing the viscoelastic behavior ($E_{int}(t, T)$) of the constituent material of the interlayer over the characteristic time and characteristic temperature ranges of the predetermined load ($F_0$) is obtained;
- the maximum value of at least one quantity ($w_{max}$; $\sigma_{max}i$) representative of the loading resistance of the laminated glazing unit (1; 10) subjected to said predetermined load ($F_0$) is calculated, using - an analytical model in which the contribution of the interlayer to shear transfer in the laminated glazing unit is represented by a transfer coefficient ($\overline{\omega}$), and - an equation expressing the transfer coefficient ($\overline{\omega}$) as a function of the Young's modulus ($E_{int}$) of the interlayer, of the applied load (F) on the laminated glazing unit and of the dimensions ($a, b, h_i, h_{intj}$) of the laminated glazing unit;
- the dimensions ($a, b, h_i, h_{intj}$) of the laminated glazing unit (1; 10) are adjusted in such a way that the calculated maximum value of the quantity ($w_{max}$; $\sigma_{max}i$) representative of the loading resistance of the laminated glazing unit (1; 10) is less than or equal to a permissible maximum value;
- the substrate (2, 4; 12, 14, 16) and the layer of interlayer (3; 13, 15) of the laminated glazing unit (1; 10) are prepared and assembled to the adjusted dimensions ($a, b, h_i, h_{intj}$).

2. The manufacturing process as claimed in claim 1, **characterized in that**, to determine the behavior law ($E_{int}(t, T)$) of the constituent material of the interlayer, the Young's modulus ($E_{int}$) is measured on a sample of the interlayer using a viscoanalyzer, by varying the frequency ($f = 1/t$) and the temperature (T) and by imposing a constant dynamic displacement, and the law of frequency/temperature equivalence established by the WLF (Williams-Landel-Ferry) method is used.

3. The manufacturing process as claimed in either of claims 1 and 2, **characterized in that** the behavior law ($E_{int}(t, T)$) of the constituent material of the interlayer (3) is determined over a frequency ($f = 1/t$) range between $5\times10^{-7}$ Hz and $3\times10^{-1}$ Hz and a temperature (T) range between -20°C and 60°C.

4. The manufacturing process as claimed in any one of the preceding claims, **characterized in that** the following are calculated as quantities representative of the loading resistance of the laminated glazing unit (1; 10):

o the deflection ($w_{max}$) of the laminated glazing unit (1; 10), on the basis of the equivalent thickness $h_{ef;w}$ of the laminated glazing such that:

$$h_{ef;w} = \sqrt[3]{(1-\varpi)\left(\sum_i h_i^3 + \sum_j h_{\text{int }j}^3\right) + \varpi\left(\sum_i h_i + \sum_j h_{\text{int }j}\right)^3} \ ,$$

and/or
o the maximum stress ($\sigma_{max}i$) on the or each substrate having a glass function of the laminated glazing unit (1; 10), on the basis of the equivalent thickness $h_{ef;\sigma;i}$ of the laminated glazing, such that:

$$h_{ef;\sigma;i} = \sqrt{\frac{\left(h_{ef;w}\right)^3}{\left(h_i + 2\varpi h_{m;i}\right)}}$$

in which

$h_i$ is the thickness of the or each substrate (2, 4; 12, 14, 16) having a glass function;
$h_{intj}$ is the thickness of the or each layer of interlayer (3; 13, 15);
$h_{m;i}$ is the distance between the mean plane of the substrate $i$ having a glass function and the mean plane of the laminated glazing unit (1; 10).

5. The manufacturing process as claimed in any one of the preceding claims, **characterized in that** said equation expressing the transfer coefficient ($\overline{\omega} = f(E_{int}, F, a, b, h_i, h_{\text{int }j})$), valid for any laminated glazing unit comprising at least one substrate having a glass function and at least one layer of polymeric interlayer, is determined according to the following steps:

- the law describing the viscoelastic behavior ($E_{int}(t, T)$) of the constituent material of the interlayer of the laminated glazing unit is obtained;

- a finite-element numerical model in bending of the laminated glazing unit is established, using the behavior law ($E_{int}(t, T)$) of the constituent material of the interlayer to define the mechanical properties of the interlayer;

- the results obtained, on the one hand, with the numerical model and, on the other hand, with an analytical model, in which the contribution of the interlayer to shear transfer is represented by a transfer coefficient ($\overline{\omega}$), are compared and the value of the transfer coefficient ($\overline{\omega}$) is adjusted until convergence of these results;

- a transfer function representative of the variation of the transfer coefficient ($\overline{\omega}$) as a function of the Young's modulus ($E_{int}$) of the interlayer is constructed by successive iterations;

- the transfer function is put in equation form in such a way that the transfer coefficient ($\overline{\omega}$) is expressed as a function of the Young's modulus ($E_{int}$) of the interlayer, of the applied load ($F$) on the laminated glazing unit and of the dimensions ($a$, $b$, $h_i$, $h_{intj}$) of the laminated glazing unit;

- the parameters of the equation expressing the transfer coefficient ($\overline{\omega}$) as a function of the Young's modulus ($E_{int}$) of the interlayer, of the applied load (F) on the laminated glazing unit and of the dimensions ($a$, $b$, $h_i$, $h_{intj}$) of the laminated glazing unit are determined empirically.

6. The manufacturing process as claimed in any one of the preceding claims, **characterized in that** the laminated glazing unit (1; 10) is a rectangular panel, the dimensions of the laminated glazing unit (1; 10) in said equation expressing the transfer coefficient ($\overline{\omega}$=f($E_{int}$, $F$, $a$, $b$, $h_i$, $h_{intj}$)) being the width ($a$) and the length ($b$) of the panel, the thickness ($h_i$) of the or each substrate (2, 4; 12, 14, 15) having a glass function and the thickness ($h_{intj}$) of the or each layer of interlayer (3; 13, 15).

7. A data recording medium, **characterized in that** it comprises instructions for implementing the calculation steps of a process for manufacturing a laminated glazing unit as claimed in any one of the preceding claims when these instructions are executed by an electronic computing unit, said instructions including an instruction to calculate the maximum value of at least one quantity ($w_{max}$; $\sigma_{max}i$) representative of the loading resistance of the laminated glazing unit (1; 10) subjected to said predetermined load ($F_0$), using - an analytical model in which the contribution of the interlayer to shear transfer in the laminated glazing unit is represented by a transfer coefficient ($\overline{\omega}$), and - an equation expressing the transfer coefficient ($\overline{\omega}$) as a function of the Young's modulus ($E_{int}$) of the interlayer, of the applied load ($F$) on the laminated glazing unit and of the dimensions ($a$, $b$, $h_i$, $h_{intj}$) of the laminated glazing unit.

8. The data recording medium as claimed in claim 7, **characterized in that** said instructions include, after the instruction to calculate the maximum value of at least one quantity ($w_{max}$; $\sigma_{max}i$) representative of the loading resistance of the laminated glazing unit (1; 10) subjected to said predetermined load ($F_0$), an instruction to calculate adjusted values of the dimensions ($a$, $b$, $h_i$, $h_{intj}$) of the laminated glazing unit (1; 10) in such a way that the calculated maximum value of the representative quantity ($w_{max}$; $\sigma_{max}i$) is less than or equal to a permissible maximum value of this representative quantity ($w_{max}$; $\sigma_{max}i$).

**Fig. 1**

**Fig. 2**

Fig. 3

Fig. 10

**Fig. 4**

**Fig. 5**

Fig. 6

Fig. 7

Fig. 8

Fig. 9